# EUROPÄISCHE PATENTSCHRIFT

(11) **EP 2 491 451 B1**
(45) Veröffentlichungstag und Bekanntmachung des Hinweises auf die Patenterteilung: **14.08.2013**
(21) Anmeldenummer: 10757056.6
(22) Anmeldetag: 27.08.2010
(51) Int. Cl.: G02B 26/10, G02B 21/00, G02B 7/182, G02B 26/08

(54) **VORRICHTUNG UND VERFAHREN ZUM ABLENKEN EINES LICHTSTRAHLS IN ZWEI UNTERSCHIEDLICHE RICHTUNGEN UND SCAN-MIKROSKOP**
DEVICE AND METHOD FOR DEFLECTING A LIGHT BEAM IN TWO DIFFERENT DIRECTIONS AND SCANNING MICROSCOPE
DISPOSITIF ET PROCÉDÉ POUR LA DÉVIATION D'UN FAISCEAU LUMINEUX SUIVANT DEUX DIRECTIONS DIFFÉRENTES, ET MICROSCOPE À BALAYAGE CORRESPONDANT

(30) Priorität: 23.10.2009 DE 102009050340
(43) Veröffentlichungstag der Anmeldung: 29.08.2012
(73) Patentinhaber: Leica Microsystems CMS GmbH, 35578 Wetzlar (DE)
(72) Erfinder: FEHRER, Dirk-Oliver, 76669 Bad Schönborn (DE); BÖHM, Ingo, 69115 Heidelberg (DE)
(74) Vertreter: Schaumburg, Thoenes, Thurn, Landskron, Eckert
(86) Internationale Anmeldenummer: PCT/EP2010/062532
(87) Internationale Veröffentlichungsnummer: WO 2011/047911

(56) Entgegenhaltungen:
- DE-A1- 3 232 953
- US-A1- 2008 074 621
- US-A1- 2008 297 868

## Beschreibung

Die Erfindung betrifft eine Vorrichtung zum Ablenken eines Lichtstrahls in zwei unterschiedliche Richtungen. Ferner betrifft die Erfindung ein Scan-Mikroskop, das die Vorrichtung zum Ablenken des Lichtstrahls in zwei unterschiedliche Richtungen umfasst und ein Verfahren zum Ablenken eines Lichtstrahls in zwei unterschiedliche Richtungen.

Bei einem Scanmikroskop wird ein Beleuchtungslichtstrahl beispielsweise über mehrere Spiegel und mit Hilfe einer Fokussieroptik auf einen zu untersuchenden Bereich einer Probe fokussiert. Das von dem zu untersuchenden Bereich ausgehende Detektionslicht wird mittels eines Detektors detektiert. Mit Hilfe von Stellelementen werden Spiegel schwingend verkippt, was ein Ablenken des Beleuchtungslichtstrahls bewirkt, so dass eine Probe mittels des Beleuchtungslichtstrahls gescannt werden kann. Dabei wird der Beleuchtungslichtstrahl so abgelenkt, dass der Fokus des Beleuchtungslichtstrahls nacheinander auf aneinandergrenzende zu untersuchende Bereiche gerichtet wird. Die dabei erfassten Bilddaten werden gespeichert und mittels einer Bilderzeugungseinheit zu einem Gesamtbild des gesamten untersuchten Bereichs zusammengesetzt.

Aus der DE 102 09 322 A1 ist eine Vorrichtung zum Ablenken eines Lichtstrahles in einem Scanmikroskop bekannt. Die Vorrichtung hat eine um eine erste Achse drehbare Einheit, die zwei zueinander ortsfeste Reflexionsflächen beinhaltet. Die erste drehbare Einheit empfängt einen Lichtstrahl und leitet diesen an eine dritte Reflexionsfläche weiter, die um eine zweite Achse, die senkrecht zur ersten Drehachse verläuft, drehbar ist. Die Vorrichtung umfasst mindestens drei Spiegel und mindestens drei Drehstellelemente, von denen eines um seine Ruhelage hin und her schwingt.

Aus der DE 196 54 210 C2 ist eine optische Anordnung zum Scannen einer Probe in zwei im Wesentlichen senkrecht zueinander liegenden Achsen bekannt. Die optische Anordnung umfasst drei Spiegel, von denen zwei mit einem ersten schwingenden Drehstellelement und eines mit einem zweiten schwingenden Drehstellelement verbunden sind.

Die bekannten Scan-Vorrichtungen haben somit mehrer als zwei Spiegel und mindestens zwei Stellelemente. Aufgrund der mehreren Spiegel sind die Scan-Vorrichtungen wenig kompakt und teuer in der Herstellung, da die Spiegel aufeinander abgestimmt, also justiert, werden müssen. Ferner ergibt sich aufgrund der mehreren Spiegel beim Verkippen der Spiegel ein Strahlversatz gegenüber einem Referenz-Strahlengang in Ruhestellung der Spiegel.

Scan-Vorrichtungen mit lediglich einem Spiegel und verschiedenen Stelleinrichtungen sind aus DE 3232953, US 2008/0074621 und US 2008/0297868 bekannt.

Es ist Aufgabe der Erfindung, eine Vorrichtung und ein Verfahren zum Ablenken eines Lichtstrahls in zwei unterschiedliche Richtungen und ein Scan-Mikroskop zu schaffen, die lediglich einen Spiegel benötigen und die besonders kompakt und günstig hergestellt bzw. durchgeführt werden können.

Die Aufgabe wird gelöst durch die Merkmale der unabhängigen Patentansprüche. Vorteilhafte Ausgestaltungen sind in den Unteransprüchen angegeben.

Die Erfindung betrifft gemäß einem ersten Aspekt eine Vorrichtung zum Ablenken eines Lichtstrahls in zwei unterschiedliche Richtungen. Die Vorrichtung umfasst einen Spiegel, der mit einem ersten Drehstellelement verbunden ist. Das erste Drehstellelement dreht sich abhängig von einem ersten Stellsignal um eine erste Achse. Zusätzlich zu dem ersten Drehstellelement ist ein zweites Drehstellelement vorgesehen. Die Erfindung zeichnet sich dadurch aus, dass das zweite Drehstellelement entlang der ersten Achse gegenüber dem ersten Drehstellelement angeordnet ist und sich abhängig von einem zweiten Stellsignal um die erste Achse dreht und dass das erste Drehstellelement über ein erstes Federelement außerhalb der ersten Achse in einem vorgegebenen ersten Abstand zu dieser mit dem Spiegel verbunden ist und dass das zweite Drehstellelement über ein zweites Federelement mit dem Spiegel verbunden ist.

Ein Ansteuern der Drehstellelemente initiiert eine Drehung der Drehstellelemente um die erste Achse. Dies bewirkt eine elastische Verformung der Federelemente, welche dann eine Kraft auf den Spiegel übertragen. Das Anordnen der beiden Drehstellelemente entlang der ersten Achse ruft bei einem gleichförmigen und nicht phasenverschobenen Ansteuern der beiden Drehstellelemente ein Drehmoment hervor, das auf den Spiegel wirkt, das parallel zu der ersten Achse ist und das eine Drehung des Spiegels ausschließlich um die erste Achse bewirkt.

Somit wird nachfolgend unter dem nicht phasenverschobenen Ansteuern und den nicht phasenverschobenen Ansteuersignalen genau das Ansteuern bzw. genau die Ansteuersignale verstanden, das bzw. die bei Gleichförmigkeit der entsprechenden Ansteuersignale die Drehung des Spiegels ausschließlich um die erste Achse bewirken. Je nach Ausbildung und Anordnung der Drehstellelemente kann dies ein Zwischenschalten eines Bauelements erfordern, das einen Phasensprung um 180° bewirkt.

Das Verbinden des ersten Federelements mit dem Spiegel außerhalb der ersten Achse ruft bei einem ungleichförmigen und/oder phasenverschobenen Ansteuern der Drehstellelemente ein Drehmoment hervor, das zumindest teilweise nicht parallel zu der ersten Achse ist und das somit so auf den Spiegel wirkt, dass sich der Spiegel um eine zweite Achse dreht, die außerhalb der ersten Achse liegt. Insbesondere können die Federelemente so mit dem Spiegel außerhalb der ersten Achse verbunden sein und die Drehstellelemente können so angesteuert werden, dass die zweite Achse senkrecht auf der ersten Achse steht.

Wird nun der Lichtstrahl auf den Spiegel gerichtet, so wird ein durch den Lichtstrahl erzeugter und mittels des Spiegels abgelenkter Lichtpunkt durch Verkippen des Spiegels um die erste Achse in eine erste Richtung abgelenkt und durch Verkippen des Spiegels um die zweite Achse in eine zweite Richtung abgelenkt, die insbesondere senkrecht auf der ersten Richtung steht, falls die zweite Achse senkrecht auf der ersten Achse steht. Wenn nun eines der beiden Drehstellelemente oder beide Drehstellelemente so angesteuert werden, dass zumindest eines der beiden Drehstellelemente um seine Ruhelage schwingt, so bewegt sich auch der Lichtpunkt beispielsweise in der ersten Richtung hin und her. Der dadurch optisch abgetastete lineare Bereich kann bei geeignetem Ansteuern der Drehstellelemente in der zweiten Richtung verschoben werden, so dass insgesamt ein flächiger Bereich optisch abgetastet werden kann. Bei geeignetem Ansteuern der Drehstellelemente, kann dann mit dem Lichtpunkt beispielsweise mäanderförmiger oder z-förmiger Bereich optisch abgetastet werden, insbesondere kann eine Probe meanderförmig bzw. z-förmig gescannt werden.

Gegenüber bekannten Scan-Vorrichtungen zum Ablenken eines Lichtstrahls, insbesondere eines damit erzeugten Lichtpunkts, in zwei unterschiedliche, beispielsweise senkrecht aufeinander stehende Richtungen, können mindestens zwei Spiegel eingespart werden. Dadurch kann die Vorrichtung besonders klein, kompakt und günstig hergestellt werden, da die Scan-Vorrichtung dann weniger Komponenten hat und die Spiegel nicht aufeinander abgestimmt und zueinander justiert werden müssen. Falls der Lichtstrahl im Drehzentrum des Spiegels auf diesen trifft ändert sich beim Verkippen des Spiegels darüber hinaus die Lage des Lichtstrahls auf dem Spiegel nicht, wodurch kein Strahlversatz wie beispielsweise bei einem Polygonspiegel-Scanner (Mehrspiegel-Scanner) auftritt.

Dass die Stellsignale gleichförmig sind, bedeutet in diesem Zusammenhang, dass eine Amplitude und eine Frequenz der Stellsignale gleich sind. Dabei können die Stellsignale beispielsweise sinusförmig, sägezahnförmig, rechteckförmig oder stufenförmig sein. Ferner können unterschiedlich geformte Signale überlagert sein. Dass die beiden Stellsignale phasenverschoben zueinander sind, bedeutet in diesem Zusammenhang, dass eine Phasenverschiebung zwischen dem ersten und dem zweiten Stellsignal vorliegt. Ein Drehsinn, gemäß dem sich die Stellelemente um die erste Achse drehen, ist in diesem Zusammenhang so definiert, dass beide Stellelemente den gleichen Drehsinn haben, wenn sie sich bezogen auf die erste Achse in die gleiche Richtung Drehen. Der Drehsinn bezieht sich somit auf ein festes äußeres Bezugssystem. Der vorgegebene erste Abstand ist zumindest größer null.

In einer vorteilhaften Ausgestaltung ist auch das zweite Drehstellelement außerhalb der ersten Achse in einem vorgegebenen zweiten Abstand zu dieser mit dem Spiegel verbunden, wodurch eine Torsionsbeanspruchung des zweiten Federelements verringert wird. Alternativ oder zusätzlich ist das erste Federelement an einer ersten Kontaktstelle mit dem Spiegel verbunden und das zweite Federelement ist an einer zweiten Kontaktstelle mit dem Spiegel verbunden, wobei ein Projektionspunkt der ersten Kontaktstelle auf der ersten Achse einen vorgegebenen dritten Abstand zu einem Projektionspunkt einer zweiten Kontaktstelle auf der ersten Achse hat. Alternativ oder zusätzlich sind die Kontaktstellen so angeordnet, dass sie bezogen auf eine Ebene, die in der Ruhelage des Spiegels die erste Achse und eine Flächennormale im Zentrum des Spiegels aufspannen, auf der gleichen Seite liegen. Die bezüglich der ersten Achse voneinander beabstandeten Kontaktstellen und die auf einer Seite der Ebene liegenden Kontaktstellen können für sich allein oder in Kombination dazu beitragen, dass die zweite Achse präzise senkrecht auf der ersten Achse steht. Auch dies trägt dazu bei, dass die beiden Richtungen, in die der Lichtstrahl abgelenkt wird, im Wesentlichen senkrecht aufeinander stehen.

In einer weiteren vorteilhaften Ausgestaltung umfasst die Vorrichtung ein drittes Federelement, das mit dem ersten Drehstellelement und außerhalb der Achse in einem vorgegebenen vierten Abstand zu dieser mit dem Spiegel verbunden ist, und/oder ein viertes Federelement, das mit dem zweiten Drehstellelement und außerhalb der ersten Achse in einem vorgegebenen fünften Abstand zu dieser mit dem Spiegel verbunden ist. Die beiden zusätzlichen Federelemente tragen dazu bei, dass die Bewegung des Spiegels besonders präzise ist, da sie eine Halte- und Führungsfunktion haben. Dies bewirkt, dass der Lichtstrahl, und insbesondere der Lichtpunkt, sehr präzise abgelenkt werden kann.

Vorzugsweise ist ein äußeres Führungselement angeordnet, das zwei Ausnehmungen hat, die konzentrisch zu der ersten Achse ausgebildet sind und die jeweils zumindest einen Teil der Drehstellelemente oder eine Halterung der Drehstellelemente in radialer Richtung umgeben. Das äußere Führungselement ist mit der Fassung des Spiegels über je ein Drehlager gekoppelt, das entlang der zweiten Achse angeordnet ist. Das äußere Führungselement ermöglicht, die Bewegung des Spiegels besonders präzise zu führen und somit den Lichtstrahl besonders präzise in die beiden unterschiedlichen Richtungen abzulenken.

Der Spiegel kann um eine dritte Achse, die in der Ruhelage des Spiegels senkrecht auf der ersten Achse steht, gedreht werden, indem ein drittes Drehstellelement angeordnet wird, das abhängig von einem dritten Stellsignal das erste und das zweite Drehstellelement und somit den Spiegel, der von den beiden Drehstellelementen gehalten wird, um eine dritte Achse dreht. Dies ermöglicht es, beliebige Abtastmuster zusätzlich zu der Meanderform zu erzielen und/oder komplex geformte Bereiche präzise zu scannen. Insbesondere kann das gesamte Scanfeld gedreht werden. Gegenüber bekannten Scan-Vorrichtungen, bei denen das Scanfeld gedreht werden kann, können so bis zu fünf Spiegel eingespart werden.

Gemäß einem zweiten Aspekt zeichnet sich die Erfindung durch ein Scan-Mikroskop aus, das zum Ablenken eines Lichtstrahls, insbesondere eines Beleuchtungslichtstrahls, die Vorrichtung zum Ablenken des Lichtstrahls umfasst.

Gemäß einem dritten Aspekt zeichnet sich die Erfindung dadurch aus, dass der Lichtstrahl in die erste Richtung abgelenkt wird, indem die beiden Stellsignale der Drehstellelemente gleichförmig sind und keine Phasenverschiebung zueinander haben, und dass der Spiegel um die zweite Achse gedreht wird, wenn die beiden Stellsignale ungleichförmig sind und/oder eine Phasenverschiebung zueinander haben.

Ausführungsbeispiele der Erfindung sind nachfolgend anhand von schematischen Zeichnungen näher erläutert:

Es zeigen:
- Figur 1: eine erste Ausführungsform der Vorrichtung zum Ablenken eines Lichtstrahls,
- Figur 2: eine zweite Ausführungsform der Vorrichtung zum Ablenken des Lichtstrahls,
- Figur 3: eine dritte Ausführungsform der Vorrichtung zum Ablenken des Lichtstrahls,
- Figur 4: eine vierte Ausführungsform der Vorrichtung zum Ablenken des Lichtstrahls,
- Figur 5: eine fünfte Ausführungsform der Vorrichtung zum Ablenken des Lichtstrahls,
- Figur 6: eine sechste Ausführungsform der Vorrichtung zum Ablenken des Lichtstrahls
- Figur 7: ein Scan-Mikroskop mit der Vorrichtung zum Ablenken des Lichtstrahls.

Elemente gleicher Konstruktion oder Funktion sind figurenübergreifend mit den gleichen Bezugszeichen gekennzeichnet.

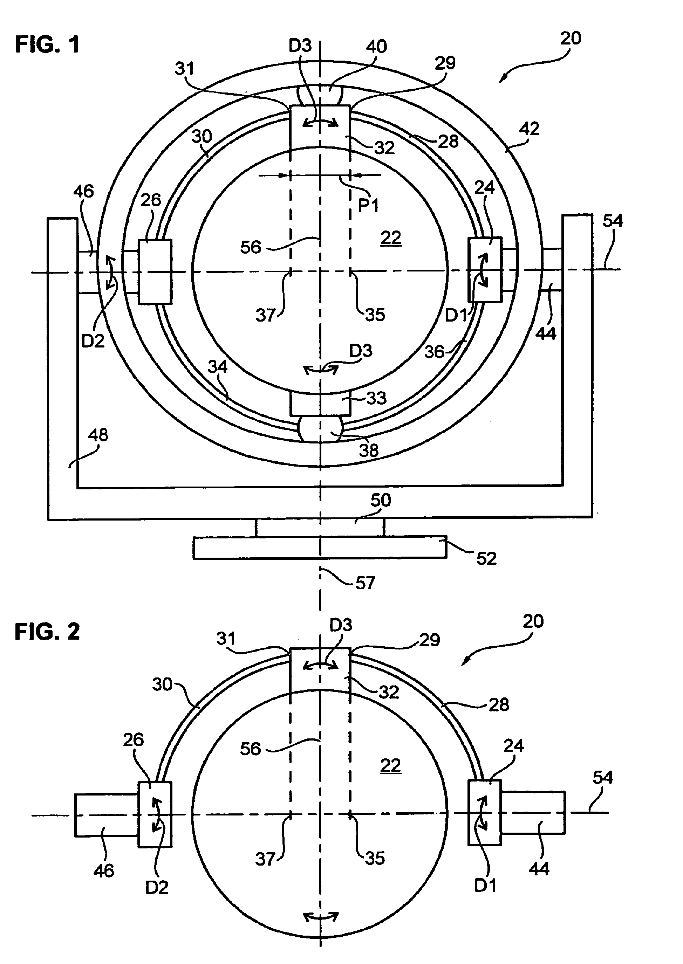

Figur 1 zeigt eine erste Ausführungsform einer Vorrichtung 20 zum Ablenken eines Lichtstrahls in zwei unterschiedliche Richtungen, die einen Spiegel 22 umfasst, der über ein erstes Federelement 28 mit einem ersten Drehstellelement 24 und über ein zweites Federelement 30 mit einem zweiten Drehstellelement 26 verbunden ist. Das erste Drehstellelement 24 ist über das erste Federelement 28 und über eine erste Fassung 32 mit dem Spiegel 22 verbunden. Das zweite Drehstellelement 26 ist bezüglich des Spiegels 22 gegenüberliegend zu dem ersten Drehstellelement 24 angeordnet und über das zweite Federelement 30 und die Fassung 32 mit dem Spiegel 22 verbunden. Zusätzlich sind noch ein drittes Federelement 36 und ein viertes Federelement 34 angeordnet, die das erste Drehstellelement 24 bzw. das zweite Drehstellelement 26 über ein erstes Drehlager 38 mit einer zweiten Fassung 33 verbinden. Das erste Drehlager 38 ist eine bewegliche Verbindung zwischen der zweiten Fassung 33 und einem äußeren Führungselement 42. Gegenüberliegend zu dem ersten Drehlager 38 ist ein zweites Drehlager 40 angeordnet. Das zweite Drehlager 40 ist eine bewegliche Verbindung zwischen der ersten Fassung 32 und dem äußeren Führungselement 42.

Die beiden Drehstellelemente 24, 26 sind über eine mit einem Träger 48 verbundene Halterung 44 des ersten Drehstellelements 24 bzw. eine mit dem Träger 48 verbundene Halterung 46 des zweiten Drehstellelements 26 verbunden. Der Träger 48 ist über ein drittes Drehstellelement 50 mit einem Standfuß 52 der Vorrichtung 20 verbunden.

Die beiden Drehstellelemente 24, 26 schwingen abhängig von einem ersten bzw. zweiten Stellsignal um eine Ruhelage des entsprechenden Drehstellelements 24, 26 entsprechend einem ersten Doppelpfeil D1 und einem zweiten Doppelpfeil D2 hin und her, wobei die erste Achse 54 die Drehachse der Schwingbewegung ist. Die Ruhelage der Drehstellelemente 24, 26 entspricht der Lage der Drehstellelemente 24, 26, falls diese nicht angesteuert werden. Falls die Drehstellelemente 24, 26 in Ruhelage sind, befindet sich auch der Spiegel 22 in seiner Ruhelage. In der Ruhelage des Spiegels 22 ist eine Spiegelfläche des Spiegels 22 parallel zu einer ersten Ebene, die die erste Achse 54 und eine zweite Achse 57 aufspannen. Die zweite Achse 57 steht senkrecht auf der ersten Achse 54 und entspricht einer Drehachse, die durch die beiden Drehlager 38, 40 vorgegeben ist.

Das erste Drehstellelement 24 ist über das erste und das dritte Federelement 28, 36 außerhalb der ersten Achse 54 in einem vorgegebenen ersten Abstand zu dieser mit dem Spiegel 22 verbunden. Das zweite Drehstellelement 26 ist über das zweite und das vierte Federelement 26, 34 außerhalb der ersten Achse 54 in einem vorgegebenen zweiten Abstand zu dieser mit dem Spiegel 22 verbunden. Der erste Abstand entspricht dem zweiten Abstand. Das erste Federelement 28 ist an einer ersten Kontaktstelle 29 und das zweite Federelement 30 ist an einer zweiten Kontaktstelle 31 mit der ersten Fassung 32 verbunden. Ein erster Projektionspunkt 35 ergibt sich durch Projektion der ersten Kontaktstelle 29 auf die erste Achse 54 in der Ruhelage des Spiegels 22. Ein zweiter Projektionspunkt 37 ergibt sich durch Projektion der zweiten Kontaktstelle 31 auf die erste Achse 54 in der Ruhelage des Spiegels 22. Die beiden Projektionspunkte 35, 37 haben auf der ersten Achse 54 einen vorgegebenen dritten Abstand P1 zueinander. Die erste Achse 54 und eine Flächennormale, die im Zentrum des Spiegels 22 senkrecht auf diesem steht, spannen eine Ebene auf. Die beiden Kontaktstellen 29, 31 liegen bezogen auf die Ebene auf der gleichen Seite. In der Ruhelage des Spiegels 22 schneidet die erste Achse 54 den Spiegel 22.

In dem Bereich, in dem das erste Federelement 28 mit dem ersten Drehstellelement 24 gekoppelt ist, steht das erste Federelement 28 nahezu senkrecht auf der ersten Achse 54. In einem Bereich, in dem das erste Federelement 28 mit der ersten Fassung 32 verbunden ist, ist das erste Federelement 28 nahezu parallel zu der ersten Achse 54. Das zweite Federelement 30 steht in einem Bereich, in dem das zweite Federelement 30 mit dem zweiten Drehstellelement 26 gekoppelt ist, nahezu senkrecht auf der ersten Achse 54 und ist in einem Bereich, in dem das zweite Federelement 30 mit der ersten Fassung 32 verbunden ist, nahezu parallel zu der ersten Achse 54. Die Federelemente 28, 30, 34, 36 sind jeweils kreissegmentförmig ausgebildet und konzentrisch zu dem Spiegel 22 angeordnet.

Das äußere Führungselement 42 hat zwei nicht dargestellte Ausnehmungen, die konzentrisch zu der ersten Achse 54 ausgebildet sind und die jeweils einen Teil der Halterungen 44, 46 der Drehstellelemente 24, 26 in radialer Richtung umgeben. Der Spiegel 22 ist somit kardanisch aufgehängt.

Die Drehlager 38, 40 sind als Kugeln ausgebildet. Die Federelemente 28, 30, 34, 36 sind aus Federdraht gebildet. Beide Drehstellelemente 24, 26 sind Drehschwingstellelemente, die beispielsweise galvanometrisch arbeiten.

Zum Ablenken des Lichtstrahls wird der Lichtstrahl auf das Zentrum des Spiegels 22 gerichtet. Ein Verdrehen der Drehstellelemente 24, 26 bewirkt eine elastische Verformung der Federelemente 28, 30, 34, 36. Dies ruft eine Kraft auf den Spiegel 22 hervor. Werden nun das erste und das zweite Drehstellelement 24, 26 abhängig von einem ersten bzw. zweiten Stellsignal so angesteuert, dass sie bezogen auf die Achse 54 den gleichen Drehsinn haben, gleichförmig schwingen und insbesondere die beiden Stellsignale gleichförmig und nicht phasenverschoben zueinander sind, so wird ein Drehmoment hervorgerufen, das auf den Spiegel 22 wirkt und dessen Drehmomentvektor parallel zu der ersten Achse 54 ist. Dadurch schwingt der Spiegel 22 ausschließlich um die erste Achse 54 und um seine Ruhelage. Dies bewirkt ein Ablenken des Lichtstrahls in eine erste Richtung. Werden die beiden Drehstellelemente 24, 26 so angesteuert, dass der Drehsinn der beiden Drehstellelemente 24, 26 bezogen auf die erste Achse 54 entgegengesetzt zueinander ist und insbesondere die beiden Stellsignale gleichförmig jedoch um 180° zueinander phasenverschoben sind, so ruft dies ein Drehmoment hervor, das auf den Spiegel 22 wirkt und dessen Drehmomentvektor senkrecht auf der ersten Achse 54 steht und parallel zu der zweiten Achse 56 ist. Dadurch dreht sich der Spiegel 22 um die zweite Achse 56 entsprechend einem dritten Doppelpfeil D3. Dies bewirkt ein Ablenken des Lichtstrahls in eine zweite Richtung, die senkrecht auf der ersten Achse 54 steht. Ein Ansteuern des dritten Drehstellelements 52 bewirkt eine Drehung des Trägers 48 mit den Drehstellelementen 24, 26 und dem Spiegel 22 um eine dritte Achse 57. Das Drehen des Trägers 48 führt zu einer Rotation der gesamten scannbaren Fläche und damit des gesamten Scanfeldes.

Das optische Abtasten einer vorgegebenen Fläche mittels des Lichtstrahls kann nun erreicht werden, indem die beiden Stellsignale so aufeinander abgestimmt werden, dass der Spiegel 22 gleichzeitig um die erste und die zweite Achse 54, 56 kippt, was ein Ablenken des Lichtstrahls in die erste und die zweite Richtung bewirkt. Dazu können die Stellsignale ungleichförmig sein und/oder eine feste oder variable Phasenverschiebung zueinander haben. Abhängig von der Wahl der Amplituden, der Frequenzen und der Phasenverschiebung können nun unterschiedlichste Abtastmuster, insbesondere ein meanderförmiges, ein z-förmiges oder mehrfach z-förmiges Abtastmuster, realisiert werden.

Gegenüber bekannten Scan-Vorrichtungen zum Ablenken von Lichtstrahlen werden somit lediglich ein Spiegel 22 und zwei Drehstellelemente 24, 26 benötigt, was eine günstige und kompakte Bauweise der Vorrichtung 20 ermöglicht, da weniger Spiegel benötigt werden. Darüber hinaus entfällt ein erheblicher Justageaufwand, der bei Mehrspiegel-Scannern nötig ist, da die mehreren Spiegel zueinander ausgerichtet werden müssen. Auch tritt kein Strahlversatz wie bei Mehrspiegel-Scannern auf, falls der Lichtstrahl im Drehzentrum auf den Spiegel 22 trifft.

In den nachfolgenden Figuren 2 bis 6 sind Ausführungsbeispiele der Vorrichtung 20 zum Ablenken des Lichtstrahls in zwei unterschiedliche Richtungen dargestellt, bei denen im Vergleich zum Beispiel nach Figur 2 verschiedene Konstruktionsteile nicht angeordnet sind.

Die in Figur 2 gezeigte zweite Ausführungsform hat im Vergleich zu der ersten Ausführungsform kein drittes und kein viertes Federelement 34, 36 und kein äußeres Führungselement 42. Dabei sind das erste und das zweite Federelement 28, 30 besonders stabil ausgebildet. Gegenüber der ersten Ausführungsform können somit weitere Bauteile eingespart werden, wodurch die Herstellungskosten weiter gesenkt werden können. Ferner kann sich der Spiegel freier bewegen, da die zweite Achse 56 nicht über die beiden Drehlager 38, 40 festgelegt ist, sondern sich aus dem Drehmoment ergibt, das über die beiden Federelemente 28, 30 auf den Spiegel 22 übertragen wird. Ansonsten entspricht die Funktionsweise der zweiten Ausführungsform der der ersten Ausführungsform, insbesondere schwingt der Spiegel 22 um die erste Achse 54 um seine Ruhelage, wenn die beiden Ansteuersignale gleichförmig und gleichphasig sind, und um die zweite Achse 56, wenn die beiden Ansteuersignale gleichförmig und um 180° phasenverschoben zueinander sind. Ferner kann durch Ablenken des Lichtstrahls das Scanfeld optisch abgetastet werden, indem die beiden Ansteuersignale geeignet überlagert werden.

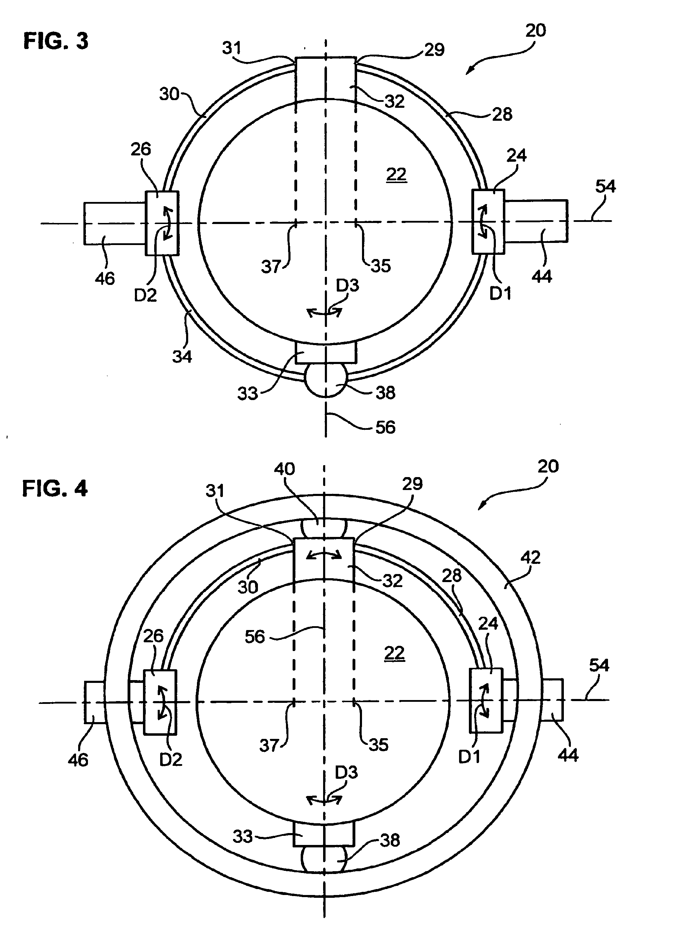

Die in Figur 3 gezeigte dritte Ausführungsform, hat im Vergleich zu der ersten Ausführungsform kein äußeres Führungselement 42. Das dritte und das vierte Führungselement 36, 34 sind über das erste Drehlager 38 mit der ersten bzw. zweiten Fassung 32, 33 verbunden. Die zweite Achse 56 ist im Bereich des ersten Drehlagers 38 durch das erste Drehlager 38 festgelegt, kann jedoch je nach Ansteuerung im Bereich der ersten Fassung 32 gegenüber der zweiten Achse 56 in der Ruhelage des Spiegels 22 verkippen. Daher hat bei der dritten Ausführungsform der Spiegel 22 mehr Bewegungsfreiheit als bei der ersten Ausführungsform und es können gegenüber der ersten Ausführungsform das äußere Führungselement eingespart werden. Ferner hat bei der dritten Ausführungsform der Spiegel 22 weniger Bewegungsfreiheit als bei der zweiten Ausführungsform und der Lichtstrahl kann präziser abgelenkt werden als bei der zweiten Ausführungsform. Die Funktionsweise der dritten Ausführungsform bezüglich der Ansteuerung der Drehstellelemente 24, 26 entspricht den Funktionsweisen der vorstehend erläuterten Ausführungsformen.

Die in Figur 4 gezeigte vierte Ausführungsform 4 hat im Vergleich zu der ersten Ausführungsform kein drittes und kein viertes Führungselement 36, 34. Der Spiegel 22 hat die gleiche Bewegungsfreiheit wie bei der ersten Ausführungsform, da die erste und die zweite Achse 54, 56 über die Drehstellelemente 24, 26 bzw. die beiden Drehlager 38, 40 festgelegt sind. Gegenüber der ersten Ausführungsform wirkt den Drehstellelementen 24, 26 aufgrund des fehlenden dritten und vierten Führungselements 36, 34 ein geringerer Widerstand entgegen. Die Funktionsweise der vierten Ausführungsform bezüglich der Ansteuerung der Drehstellelemente 24, 26 entspricht den Funktionsweisen der vorstehend erläuterten Ausführungsformen.

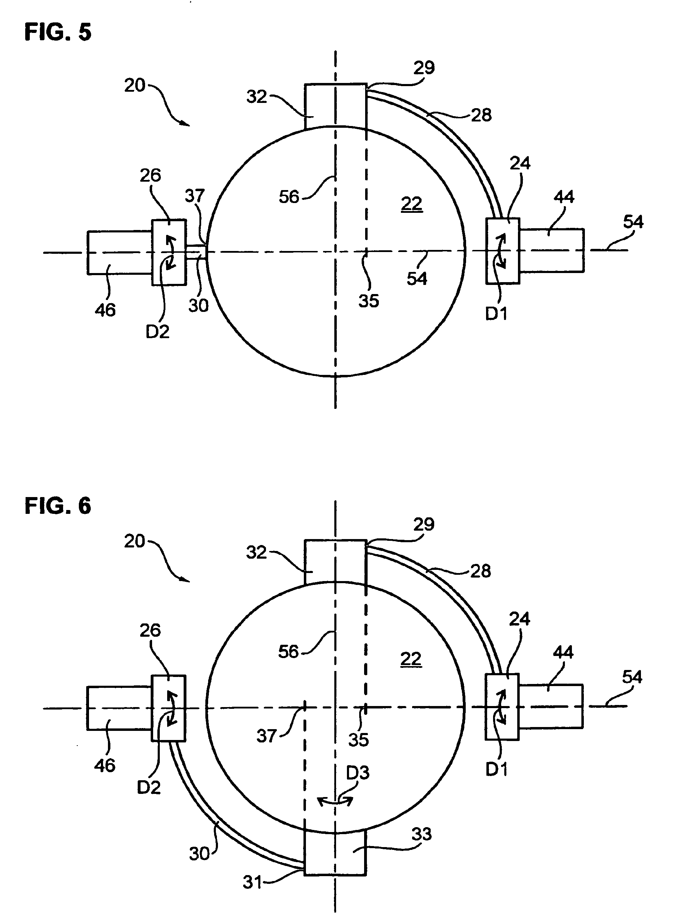

Bei der in Figur 5 gezeigten fünften Ausführungsform ist im Vergleich zu der ersten Ausführungsform das zweite Drehstellelement 26 in Verlängerung der ersten Achse 54 mit dem Spiegel 22 verbunden und die fünfte Ausführungsform hat auch kein drittes oder viertes Federelement 36, 34 und kein äußeres Führungselement 42. Bei dieser Ausführungsform werden somit gegenüber der ersten Ausführungsform Kosten eingespart, da weniger Komponenten angeordnet sind. Bei dem ungleichförmigen oder phasenverschobenen Ansteuern des ersten und zweiten Drehstellelements 28, 30 dreht sich der Spiegel 22 um eine Achse, die von der in Figur 5 gezeigten zweiten Achse 56 abweicht. Falls die beiden Drehstellelemente gleichförmig und gleichphasig angesteuert werden, so dreht sich der Spiegel 22 um die erste Achse 54. Die Funktionsweise der fünften Ausführungsform bezüglich der Ansteuerung der Drehstellelemente 24, 26 entspricht im Wesentlichen den Funktionsweisen der vorstehend erläuterten Ausführungsformen, wobei zum präzisen Ablenken des Lichtstrahls berücksichtigt wird, dass abhängig von der Ansteuerung die tatsächliche Drehachse des Spiegels 22 von der zweiten Achse 56 abweichen kann.

Bei der in Figur 6 gezeigten sechsten Ausführungsform ist das zweite Federelement 30 bezogen auf die Ebene, die in der Ruhelage des Spiegels 22 die erste Achse 54 und die Flächennormale im Zentrum des Spiegels 22 aufspannen, auf der gegenüberliegenden Seite des ersten Federelements 28 mit der zweiten Fassung 33 verbunden. Auch bei dieser Ausführungsform kann abhängig von der Stellung der beiden Drehstellelemente 24, 26 bei der schwingenden Hin- und Herbewegung um die Ruhelage des entsprechenden Drehstellelements 24, 26 die tatsächliche Drehachse des Spiegels 22 nicht mehr präzise senkrecht auf der ersten Achse 54 stehen. Insbesondere kann die Lage der tatsächlichen Drehachse abhängig von der Ansteuerung der Drehstellelemente 24, 26 variieren. Dies kann dazu führen, dass das Abtastmuster nicht genau meanderförmig, z-förmig oder der mehrfach-z-förmig ist. Diese Abweichung kann jedoch beim Stromsignal zum Ansteuern der beiden Drehstellelemente 24, 26 so berücksichtigt werden, dass dennoch ein optisches Abtasten einer vorgegebenen Fläche mit Hilfe des abgelenkten Lichtstrahls möglich ist.

Alle Ausführungsformen können alternativ auch ohne die erste und die zweite Fassung 32, 33 ausgebildet sein. In diesem Fall sind die Federelemente 28, 30, 34, 36 beispielsweise direkt mit dem Spiegel verbunden. Ferner können die beiden Fassungen 32, 33 einstückig ausgebildet sein. Alternativ zu einem oder beiden kugelförmigen Drehlagern 38, 40 können andere Lager angeordnet sein, die die zweite Achse 56 als tatsächliche Drehachse des Spiegels 22 festlegen und das Drehen des Spiegels 22 um die zweite Achse 56 ermöglichen.

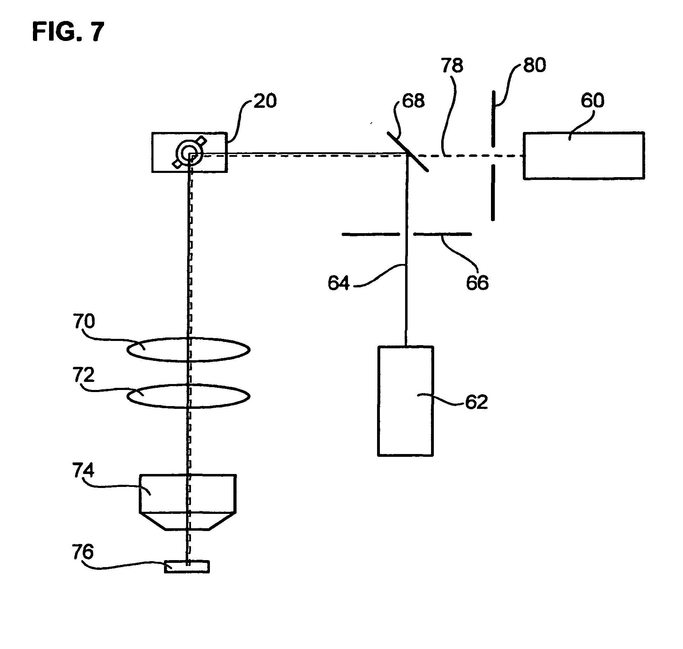

Figur 7 zeigt ein Scan-Mikroskop mit einer Lichtquelle 62, beispielsweise einem Laser, mit einem Detektor 60 und mit der Vorrichtung 20 zum Ablenken des Lichtstrahls in zwei unterschiedliche Richtungen. Das Scan-Mikroskop ist als konfokales Scan-Mikroskop ausgebildet. Die Lichtquelle 62 emittiert einen Beleuchtungslichtstrahl 64. Der Beleuchtungslichtstrahl 64 ist auf eine erste Blende 66 fokussiert und wird über einen Hauptstrahlteiler 68, der beispielsweise einen dichroitischen Spiegel umfasst, auf die Vorrichtung 20 gerichtet. Die Vorrichtung 20 lenkt den Beleuchtungslichtstrahl 64 über eine Scanoptik 70 und über eine Tubusoptik 72 auf eine Fokussieroptik 74, die den Beleuchtungslichtstrahl 64 auf eine Probe 76 fokussiert. Ein von der Probe 76 ausgehender Detektionslichtstrahl 78 folgt dem Strahlengang des Beleuchtungslichtstrahls 64 in umgekehrter Richtung bis hin zu dem Hauptstrahlteiler 68. Dieser trennt den Detektionslichtstrahl 78 und den Beleuchtungslichtstrahl 64. Der Detektionslichtstrahl 78 trifft über eine zweite Blende 80 auf den Detektor 60.

Durch Ansteuern der beiden Drehstellelemente 24, 26 gemäß der vorstehend erläuterten Weise wird die Probe 76 mit Hilfe des durch die Vorrichtung 20 abgelenkten Beleuchtungslichtstrahls 64 optisch abgetastet und so gescannt. Insbesondere werden die beiden Drehstellelemente 24, 26 so um ihre Ruhelage schwingend angesteuert, dass ein mittels des Beleuchtungslichtstrahls 64 erzeugter Beleuchtungspunkt, einen flächigen Bereich auf der Probe 76 entlang mehrerer aneinander grenzender Linien, beispielsweise 200 Linien, überstreicht und so den flächigen Bereich der Probe 76 optisch abtastet. Der flächige Bereich kann auch als Scanfeld bezeichnet werden. Ein maximaler Drehwinkel, um den sich je eines der beiden Drehstellelemente 24, 26 aus seiner Ruhelage heraus dreht, kann beispielsweise in einem Bereich zwischen +4° bis +12° und/oder -4° bis -12° betragen. Eine Frequenz mit der eines oder beide Drehstellelemente 24, 26 um ihre Ruhelage schwingen kann beispielsweise zwischen 500 und 1500 Hz liegen. Alternativ zu dem Federdraht kann eines oder mehrere der Federelemente 28, 30, 34, 36 aus Federstahl gebildet sein. Ferner kann lediglich eines der beiden Drehstellelemente 24, 26 oder beide Drehstellelemente 24, 26 nicht als galvanometrisch arbeitendes Schwingelement ausgebildet sein.

Die Erfindung ist nicht auf die angegebenen Ausführungsbeispiele beschränkt. Insbesondere ist ein Fülle von unterschiedlichen Ausführungsformen denkbar, bei denen zumindest eines der Federelemente 28, 30, 34, 36 außerhalb der ersten Achse 54 mit dem Spiegel 22 verbunden ist, so dass grundsätzlich zusätzlich zu dem Drehmoment parallel zu der ersten Achse 54 ein Drehmoment auf den Spiegel 22 hervorgerufen werden kann, das nicht parallel zu der ersten Achse 54 ist, und so der Lichtstrahl in die zweite Richtung abgelenkt werden kann, die nicht parallel zu der ersten Richtung ist, jedoch auch nicht senkrecht auf der ersten Achse 54 stehen muss. Ferner kann die Vorrichtung 20 zum Ablenken des Lichtstrahls in zwei unterschiedliche Richtungen alternativ zu dem Scan-Mikroskop in Laserprojektoren, bei der Laser-Materialbearbeitung, zur Laserbeschriftung, in Laserkopierern oder Laser-Scannern verwendet werden.

### Bezugszeichenliste:

- 20: Vorrichtung zum Ablenken eines Lichtstrahls
- 22: Spiegel
- 24: erstes Drehstellelement
- 26: zweites Drehstellelement
- 28: erstes Federelement
- 29: erste Kontaktstelle
- 30: zweites Federelement
- 31: zweite Kontaktstelle
- 32: erste Fassung
- 33: zweite Fassung
- 34: viertes Federelement
- 35: erster Projektionspunkt
- 36: drittes Federelement
- 37: zweiter Projektionspunkt
- 38: erstes Drehlager
- 40: zweites Drehlager
- 42: äußeres Führungselement
- 44: Halterung des ersten Drehstellelements
- 46: Halterung des zweiten Drehstellelements
- 48: Träger
- 50: drittes Drehstellelement
- 52: Standfuß
- 54: erste Achse
- 56: zweite Achse
- 57: dritte Achse
- 60: Detektor
- 62: Lichtquelle
- 64: Beleuchtungslichtstrahl
- 66: erste Blende
- 68: Hauptstrahlteiler
- 70: Scanoptik
- 72: Tubusoptik
- 74: Fokussieroptik
- 76: Probe
- 78: Detektionslichtstrahl
- 80: zweite Blende

- P1: dritter Abstand
- D1: erster Doppelpfeil
- D2: zweiter Doppelpfeil
- D3: dritter Doppelpfeil

## Patentansprüche

1. Vorrichtung (20) zum Ablenken eines Lichtstrahls in zwei unterschiedliche Richtungen,
mit einem Spiegel (22),
einem ersten Drehstellelement (24), das sich abhängig von einem ersten Stellsignal um eine erste Achse (54) dreht,
einem zweiten Drehstellelement (26), das entlang der ersten Achse (54) gegenüber dem ersten Drehstellelement (24) angeordnet ist und das sich abhängig von einem zweiten Stellsignal um die erste Achse (54) dreht,
einem ersten Federelement (28), das mit dem ersten Drehstellelement (24) und in einer Ruhelage des Spiegels (22) außerhalb der ersten Achse (54) in einem vorgegebenen ersten Abstand zu dieser mit dem Spiegel (22) verbunden ist,
und mit einem zweiten Federelement (30), das mit dem zweiten Drehstellelement (26) und dem Spiegel (22) verbunden ist,
so dass der Spiegel (22) um die erste Achse (54) gedreht wird, wenn das erste Stellsignal und das zweite Stellsignal gleichförmig sind und keine Phasenverschiebung zueinander haben, und der Spiegel (22) um eine zweite Achse, die nicht der ersten Achse (54) entspricht, gedreht wird, wenn das erste Stellsignal und das zweite Stellsignal ungleichförmig sind und/oder eine Phasenverschiebung zueinander haben.

2. Vorrichtung (20) nach Anspruch 1, bei der das zweite Drehstellelement (26) außerhalb der ersten Achse (54) in einem vorgegebenen zweiten Abstand zu dieser mit dem Spiegel (22) verbunden ist.

3. Vorrichtung (20) nach einem der vorstehenden Ansprüche,
bei der das erste Federelement (28) an einer ersten Kontaktstelle (29) mit dem Spiegel (22) verbunden ist,
das zweite Federelement (30) an einer zweiten Kontaktstelle (31) mit dem Spiegel (22) verbunden ist,
und bei der ein Projektionspunkt (35) der ersten Kontaktstelle (29) auf der ersten Achse (54) einen vorgegebenen dritten Abstand (P1) zu einem Projektionspunkt (37) der zweiten Kontaktstelle (31) auf der ersten Achse (54) hat.

4. Vorrichtung (20) nach einem der vorstehenden Ansprüche,
bei der das erste Federelement (28) an einer ersten Kontaktstelle (29) mit dem Spiegel (22) verbunden ist,
das zweite Federelement (28) an einer zweiten Kontaktstelle (31) mit dem Spiegel (22) verbunden ist,
in einer Ruhelage des Spiegels (22) die erste Achse (54) und eine Flächennormale im Zentrum des Spiegels (22) eine Ebene aufspannen und bei der die beiden Kontaktstellen (29, 31) bezogen auf die Ebene auf der gleichen Seite liegen.

5. Vorrichtung (20) nach einem der vorstehenden Ansprüche, bei der das erste und/oder das zweite Federelement (28, 30) über eine Fassung (32) mit dem Spiegel (22) verbunden sind.

6. Vorrichtung (20) nach einem der vorstehenden Ansprüche, bei der in der Ruhelage des Spiegels (22) die erste Achse (54) den Spiegel (22) und/oder die Fassung (32) schneidet.

7. Vorrichtung (20) nach einem der vorstehenden Ansprüche,
bei der das erste Federelement (28) in einem Bereich, in dem das erste Federelement (28) mit dem ersten Drehstellelement (24) gekoppelt ist, senkrecht oder näherungsweise senkrecht auf der ersten Achse (54) steht und in einem Bereich, in dem das erste Federelement (28) mit dem Spiegel (22) bzw. der Fassung (32) verbunden ist, parallel oder näherungsweise parallel zu der ersten Achse (54) ist,
und/oder bei der das zweite Federelement (30) in einem Bereich, in dem das zweite Federelement (30) mit dem zweiten Drehstellelement (26) gekoppelt ist, senkrecht oder näherungsweise senkrecht auf der ersten Achse (54) steht und in einem Bereich, in dem das zweite Federelement (30) mit dem Spiegel (22) bzw. der Fassung (32) verbunden ist, parallel oder näherungsweise parallel zu der ersten Achse (54) ist.

8. Vorrichtung (20) nach einem der vorstehenden Ansprüche,
die ein drittes Federelement (36) umfasst, das mit dem ersten Drehstellelement (24) und außerhalb der ersten Achse (54) in einem vorgegebenen vierten Abstand zu dieser mit dem Spiegel (22) verbunden ist,
und/oder die ein viertes Federelement (34) umfasst, das mit dem zweiten Drehstellelement (26) und außerhalb der ersten Achse (54) in einem vorgegebenen fünften Abstand zu dieser mit dem Spiegel (22) verbunden ist.

9. Vorrichtung (20) nach einem der vorstehenden Ansprüche, die ein äußeres Führungselement (42) umfasst,
das zwei Ausnehmungen hat, die konzentrisch zu der ersten Achse (54) ausgebildet sind und die jeweils zumindest einen Teil der Drehstellelemente (24, 26) oder eine Halterung (44, 46) der Drehstellelemente (24, 26) in radialer Richtung umgeben,
und das mit der Fassung (32) des Spiegels (22) über je ein Drehlager (38, 40) gekoppelt ist, das entlang der zweiten Achse (56) angeordnet ist.

10. Vorrichtung (20) nach Anspruch 9, bei der das dritte und/oder das vierte Federelement (36, 34) über eines der Drehlager (38, 40) mit der Fassung (32) des Spiegels (22) gekoppelt sind.

11. Vorrichtung (20) nach einem der vorstehenden Ansprüche, mit einem dritten Drehstellelement (50), das abhängig von einem dritten Stellsignal das erste und das zweite Drehstellelement (24, 26) und somit den Spiegel (22) um eine dritte Achse (57) dreht, die in der Ruhelage des Spiegels (22) senkrecht oder näherungsweise senkrecht auf der ersten Achse (54) steht.

12. Scan-Mikroskop, das zum Ablenken eines Lichtstrahls die Vorrichtung (20) nach einem der vorstehenden Ansprüche umfasst.

13. Verfahren zum Ablenken eines Lichtstrahls in zwei unterschiedliche Richtungen,
bei dem der Lichtstrahl auf einen Spiegel (22) gerichtet wird,
der Spiegel (22) um eine erste Achse (54) gedreht wird, indem ein erstes Drehstellelement (24), das sich um die erste Achse (54) dreht, abhängig von einem ersten Stellsignal angesteuert wird und indem ein zweites Drehstellelement (26), das entlang der ersten Achse (54) gegenüber dem ersten Drehstellelement (24) angeordnet ist, und das sich um die erste Achse (54) dreht, abhängig von einem zweiten Stellsignal angesteuert wird, wobei die beiden Stellsignale gleichförmig sind und keine Phasenverschiebung zueinander haben,
wobei ein erstes Federelement (28) mit dem ersten Drehstellelement (24) in einer Ruhelage des Spiegels (22) außerhalb der ersten Achse (54) in einem vorgegebenen ersten Abstand zu dieser mit dem Spiegel (22) verbunden ist, und wobei ein zweites Federelement (30) mit dem zweiten Drehstellelement (26) und dem Spiegel (22) verbunden ist,
und bei dem der Spiegel (22) um eine zweite Achse gedreht wird, die nicht der ersten Achse (54) entspricht, wenn die beiden Stellsignale ungleichförmig sind und/oder eine Phasenverschiebung zueinander haben.

14. Verfahren nach Anspruch 13, bei dem zumindest eines der beiden Stellsignale variiert wird.

## Claims

1. A device (20) for deflecting a light beam in two different directions,
with a mirror (22),
a first rotating actuator element (24), which rotates about a first axis (54) as a function of a first actuation signal,
a second rotating actuator element (26), which is arranged opposite to the first rotating actuator element (24) along the first axis (54) and which rotates about the first axis (54) as a function of a second actuation signal,
a first spring element (28), which is connected to the first rotating actuator element (24) and, off-axially with respect to the first axis (54) at a predetermined first distance thereto, to the mirror (22) in a rest position of the mirror,
and with a second spring element (30), which is connected to the second rotating actuator element (26) and to the mirror (22),
so that the mirror (22) is rotated about the first axis (54) if the first actuation signal and the second actuation signal are of one form and if they have no phase shift to each other and so that the mirror (22) is rotated about a second axis that does not corresponds to the first axis (54), if the first actuation signal and the second actuation signal are not of the same form and/or have a phase shift with respect to one another.

2. The device (20) as claimed in claim 1, wherein the second rotating actuator element (26) is connected to the mirror (22) off-axially with respect to the first axis (54) at a predetermined second distance thereto.

3. The device (20) as claimed in one of the preceding claims,
wherein the first spring element (28) is connected to the mirror (22) at a first contact point (29),
the second spring element (30) is connected to the mirror (22) at a second contact point (31),
and wherein a projection point (35) of the first contact point (29) on the first axis (54) has a predetermined third distance (P1) to a projection point (37) of the second contact point (31) on the first axis (54).

4. The device (20) as claimed in one of the preceding claims,
wherein the first spring element (28) is connected to the mirror (22) at a first contact point (29),
the second spring element (28) is connected to the mirror (22) at a second contact point (31),
the first axis (54) and a surface normal in the center of the mirror (22) span a plane in a rest position of the mirror (22) and wherein the two contact points (29, 31) lie on the same side in respect of the plane.

5. The device (20) as claimed in one of the preceding claims, wherein the first and/or the second spring element (28, 30) is connected to the mirror (22) via a mount (32).

6. The device (20) as claimed in one of the preceding claims, wherein the first axis (54) cuts the mirror (22) and/or the mount (32) in the rest position of the mirror (22).

7. The device (20) as claimed in one of the preceding claims,
wherein the first spring element (28) is perpendicular or approximately perpendicular to the first axis (54) in a region in which the first spring element (28) is coupled to the first rotating actuator element (24), and parallel or approximately parallel to the first axis (54) in a region in which the first spring element (28) is connected to the mirror (22) or the mount (32),
and/or wherein the second spring element (30) is perpendicular or approximately perpendicular to the first axis (54) in a region in which the second spring element (30) is coupled to the second rotating actuator element (26), and parallel or approximately parallel to the first axis (54) in a region in which the second spring element (30) is connected to the mirror (22) or the mount (32).

8. The device (20) as claimed in one of the preceding claims,
which comprises a third spring element (36), which is connected to the first rotating actuator element (24) and, off-axially with respect to the first axis (54) at a predetermined fourth distance thereto, to the mirror (22),
and/or which comprises a fourth spring element (34), which is connected to the second rotating actuator element (26) and, off-axially with respect to the first axis (54) at a predetermined fifth distance thereto, to the mirror (22).

9. The device (20) as claimed in one of the preceding claims, which comprises an outer guide element (42),
which has two recesses, which are formed concentrically with respect to the first axis (54) and respectively in the radial direction surround at least part of the rotating actuator elements (24, 26) or a holder (44, 46) of the rotating actuator elements (24, 26),
and which is coupled to the mount (32) of the mirror (22) via respectively one pivot bearing (38, 40), which is arranged along the second axis (56).

10. The device (20) as claimed in claim 9, wherein the third and/or the fourth spring element (36, 34) is coupled to the mount (32) of the mirror (22) via one of the pivot bearings (38, 40).

11. The device (20) as claimed in one of the preceding claims, with a third rotating actuator element (50) which, as a function of a third actuation signal, rotates the first and the second rotating actuator element (24, 26), and hence the mirror (22), about a third axis (57) which, in the rest position of the mirror (22), is perpendicular or approximately perpendicular to the first axis (54).

12. A scanning microscope which comprises the device (20) as claimed in one of the preceding claims for deflecting a light beam.

13. A method for deflecting a light beam in two different directions,
wherein the light beam is directed at a mirror (22),
the mirror (22) is rotated about a first axis (54) by actuating, as a function of a first actuation signal, a first rotating actuator element (24) which rotates about the first axis (54) and by actuating, as a function of a second actuation signal, a second rotating actuator element (26) which is arranged along the first axis (54) opposite of the first rotating actuator element (24) and which rotates about the first axis (54), wherein the two actuation signals are of the same form and do not have a phase shift with respect to one another,
wherein a first spring element (28) is connected to the mirror (22) with the first rotating actuator element (24) in a rest position of the mirror (22) off-axially with respect to the first axis (54) in a predetermined first distance thereto, and wherein a second spring element (30) is connected to the second rotating actuator element (26) and the mirror (22),
and wherein the mirror (22) is rotated about a second axis, which does not correspond to the first axis (54), if the two actuation signals are not of the same form and/or have a phase shift with respect to one another.

14. The method as claimed in claim 13, wherein at least one of the two actuation signals is varied.

## Revendications

1. Dispositif (20) destiné à dévier un rayon lumineux dans deux directions différentes,
comportant un miroir (22)
un premier actionneur rotatif (24), qui tourne autour d'un premier axe (54) en fonction d'un premier signal de réglage,
un deuxième actionneur rotatif (26) qui est disposé le long du premier axe (54) en regard du premier actionneur rotatif (24) et qui tourne autour du premier axe (54) en fonction d'un deuxième signal de réglage,
un premier élément à ressort (28), qui est relié au premier actionneur rotatif (24) et, dans une position de repos du miroir (22), est relié au miroir (22) en dehors du premier axe (54) à une première distance prédéfinie de celui-ci,
et comportant un deuxième élément à ressort (30) qui est relié au deuxième actionneur rotatif (26) et au miroir (22),
de telle sorte que le miroir (22) est amené à tourner autour du premier axe (54) lorsque le premier signal de réglage et le deuxième signal de réglage ont la même forme et n'ont pas de décalage de phase entre eux, et le miroir (22) est amené à tourner autour d'un deuxième axe qui ne correspond pas au premier axe (54), lorsque le premier signal de réglage et le deuxième signal de réglage n'ont pas la même forme et/ou ont un décalage de phase entre eux.

2. Dispositif (20) selon la revendication 1, dans lequel le deuxième actionneur rotatif (26) est relié au miroir (22) en dehors du premier axe (54) à une deuxième distance prédéfinie de celui-ci.

3. Dispositif (20) selon l'une quelconque des revendications précédentes, dans lequel le premier élément à ressort (28) est relié au miroir (22) au niveau d'un premier point de contact (29), le deuxième élément à ressort (30) est relié au miroir (22) au niveau d'un deuxième point de contact (31),
et dans lequel un point de projection (35) du premier point de contact (29) sur le premier axe (54) est situé à une troisième distance (P1) prédéfinie par rapport au point de projection (37) du deuxième point de contact (31) sur le premier axe (54).

4. Dispositif (20) selon l'une quelconque des revendications précédentes, dans lequel le premier élément à ressort (28) est relié au miroir (22) au niveau d'un premier point de contact (29), le deuxième élément à ressort (30) est relié au miroir (22) au niveau d'un deuxième point de contact (31), et, dans une position de repos du miroir (22), le premier axe (54) et une normale à la surface du miroir (22) au centre de celui-ci déploient un plan et dans lequel les deux points de contact (29, 31) sont situés sur le même côté par rapport audit plan.

5. Dispositif (20) selon l'une quelconque des revendications précédentes, dans lequel le premier et/ou le deuxième élément à ressort (28, 30) sont reliés au miroir (22) par l'intermédiaire d'une monture (32).

6. Dispositif (20) selon l'une quelconque des revendications précédentes, dans lequel, dans la position de repos du miroir (22), le premier axe (54) coupe le miroir (22) et/ou la monture (32).

7. Dispositif (20) selon l'une quelconque des revendications précédentes, dans lequel, dans une zone dans laquelle le premier élément à ressort (28) est couplé au premier actionneur rotatif (24), le premier élément à ressort (28) est perpendiculaire ou sensiblement perpendiculaire au premier axe (54) et, dans une zone dans laquelle le premier élément à ressort (28) est relié au miroir (22) ou à la monture (32), ledit premier élément à ressort (28) est parallèle ou sensiblement parallèle au premier axe (54),
et/ou dans lequel, dans une zone dans laquelle le deuxième élément à ressort (30) est couplé au deuxième actionneur rotatif (26), ledit deuxième élément à ressort (30) est perpendiculaire ou sensiblement perpendiculaire au premier axe (54) et, dans une zone dans laquelle le deuxième élément à ressort (30) est relié au miroir (22) ou à la monture (32), ledit deuxième élément à ressort (30) est parallèle ou sensiblement parallèle au premier axe (54).

8. Dispositif (20) selon l'une quelconque des revendications précédentes,
lequel comporte un troisième élément à ressort (36) qui est relié au premier actionneur rotatif (24) et au miroir (22) en dehors du premier axe (54) à une quatrième distance prédéfinie par rapport à celui-ci,
et/ou qui comporte un quatrième élément à ressort (34) qui est relié au deuxième actionneur rotatif (26) et au miroir (22) en dehors du premier axe (54) à une cinquième distance prédéfinie par rapport à celui-ci.

9. Dispositif (20) selon l'une quelconque des revendications précédentes, lequel comporte un élément de guidage (42) extérieur,
qui comporte deux évidements qui sont réalisés concentriquement au premier axe (54) et qui entourent chacun dans le sens radial au moins une partie des actionneurs rotatifs (24, 26) ou un support (44, 46) des actionneurs rotatifs (24, 26),
et qui est couplé à la monture (32) du miroir (22) respectivement par l'intermédiaire d'un palier rotatif (38, 40), qui est agencé le long du deuxième axe (56).

10. Dispositif (20) selon la revendication 9, dans lequel le troisième et/ou le quatrième élément à ressort (36, 34) sont couplés à la monture (32) du miroir (22) par l'intermédiaire d'un des paliers rotatifs (38, 40).

11. Dispositif (20) selon l'une quelconque des revendications précédentes, comportant un troisième actionneur rotatif (50) qui, en fonction d'un troisième signal de réglage fait tourner le premier et le deuxième actionneur rotatif (24, 26) et donc le miroir (22) autour d'un troisième axe (57) qui, dans la position de repos du miroir (22), est perpendiculaire ou sensiblement perpendiculaire au premier axe (54).

12. Microscope à balayage qui, pour dévier un rayon lumineux, comporte le dispositif (20) selon l'une quelconque des revendications précédentes.

13. Procédé permettant de dévier un rayon lumineux dans deux directions différentes,
selon lequel le rayon lumineux est dirigé vers un miroir (22),
le miroir (22) est amené à tourner autour d'un premier axe (54), du fait qu'un premier actionneur rotatif (24), qui tourne autour du premier axe (54), est actionné en fonction d'un premier signal de réglage, et du fait qu'un deuxième actionneur rotatif (26), qui est disposé le long du premier axe (54) en regard du premier actionneur rotatif (24) et qui tourne autour du premier axe (54), est actionné en fonction d'un deuxième signal de réglage, les deux signaux de réglage ayant la même forme et aucun décalage de phase entre eux,
un premier élément à ressort (28) avec le premier actionneur rotatif (24) étant relié au miroir (22) en dehors du premier axe (54), dans une position de repos du miroir (22), à une première distance prédéfinie dudit axe, et un deuxième élément à ressort (30) étant relié au deuxième actionneur rotatif (26) et au miroir (22),
et selon lequel le miroir (22) est amené à tourner autour d'un deuxième axe, qui ne correspond pas au premier axe (54), lorsque les deux signaux de réglage n'ont pas la même forme et/ou ont un décalage de phase entre eux.

14. Procédé selon la revendication 13, dans lequel on fait varier au moins un des deux signaux de réglage.
